Europäisches Patentamt

European Patent Office

Office européen des brevets

(11) Publication number: **0 177 928**
**B1**

(12) **EUROPEAN PATENT SPECIFICATION**

(45) Date of publication of patent specification: **29.06.88**　(51) Int. Cl.⁴: **G 02 B 6/00**

(21) Application number: **85112707.6**

(22) Date of filing: **08.10.85**

(54) Optical waveguide, particularly optical fiber.

(30) Priority: **09.10.84 US 659150**

(43) Date of publication of application:
**16.04.86 Bulletin 86/16**

(45) Publication of the grant of the patent:
**29.06.88 Bulletin 88/26**

(84) Designated Contracting States:
**DE FR GB IT NL**

(56) References cited:
**EP-A-0 088 410**
**GB-A-2 135 473**
**US-A-4 130 343**
**US-A-4 381 882**

(73) Proprietor: **Hewlett-Packard Company
Mail Stop 20 B-O 3000 Hanover Street
Palo Alto California 94304 (US)**

(72) Inventor: **Nordby, Rasmus
10177 Viceroy Ct. No.2
Cupertino California 95014 (US)**

(74) Representative: **Liesegang, Roland, Dr.-Ing. et al
FORRESTER & BOEHMERT Widenmayerstrasse
4 Postfach 22 01 37
D-8000 München 22 (DE)**

Courier Press, Leamington Spa, England.

## Description

The present invention relates to an optical waveguide, particularly an optical fiber, in accordance with the preamble to claim 1.

In a known waveguide of this kind (EP—A—0 088 410) the flat end-face is inclined at an inclination such that the rays resulting from a single reflection at said end-face are redirected back into the waveguide at an inclination higher than the limit for total reflection in order to encounter the problems of troublesom back propagation of light rays.

In optical fiber communication and measurement systems which operate on light waves originated at a source and propagated through an optical waveguide path such as an optical fiber, reflections from discontinuities in the path may disturb the modulation characteristics of the source or introduce "ripple" or other measurement inaccuracies due to reflections (standing waves) in the waveguide. By employing fusion splices when two optical fibers are to be joined together the reflection from connections can be made negligibly small. Nevertheless a flat optical fiber end will still produce a significant reflection back into the fiber and source.

In an optical waveguide according to the preamble to claim 1, reflections at the exit surface of the waveguide which propagate back to the source through the waveguide are suppressed by provision of the chracterizing features of the claim.

As claimed the optical waveguide, or fiber, has a reflecting plane disposed at an oblique angle to the direction along which light is propagated through the waveguide, with the reflecting plane reflecting the light out of an exit surface of the waveguide. The angle is chosen so that no part of the light exiting the waveguide is reflected back by the exit surface and the reflecting plane and/or other surfaces of the waveguide so as to be propagated into the opposite direction by the waveguide.

In accordance with claim 2 the waveguide may comprise core and cladding regions cooperating to guide light within the core region wherein the inclined end-face reflects into the cladding region light incident thereon from propagation within the core region.

In accordance with claim 3 the waveguide may be of cylindrical shape with the cladding region surrounding it wherein the exit surface is a part of the outer surface of the cladding region.

Claim 4 is directed to a preferred practical embodiment of the invention. In accordance with claim 5 a waveguide according to the invention may be supplemented by a photo detecting means for detecting light leaving the waveguide through the exit surface. Preferably, in this case, the photo detecting means is arranged in front of the exit surface of the waveguide in a manner such that no light incident on the photo detecting means from the waveguide is reflected back by the photo detecting means to be propagated back into the waveguide.

An embodiment of the invention will now be described in detail with reference to the accompanying drawings wherein:

Figure 1 shows an optical fiber, a photo diode and optical paths from the optical fiber to the photo diode in accordance with an embodiment of the present invention, and

Figure 2 shows reflection paths within the optical fiber shown in Figure 1.

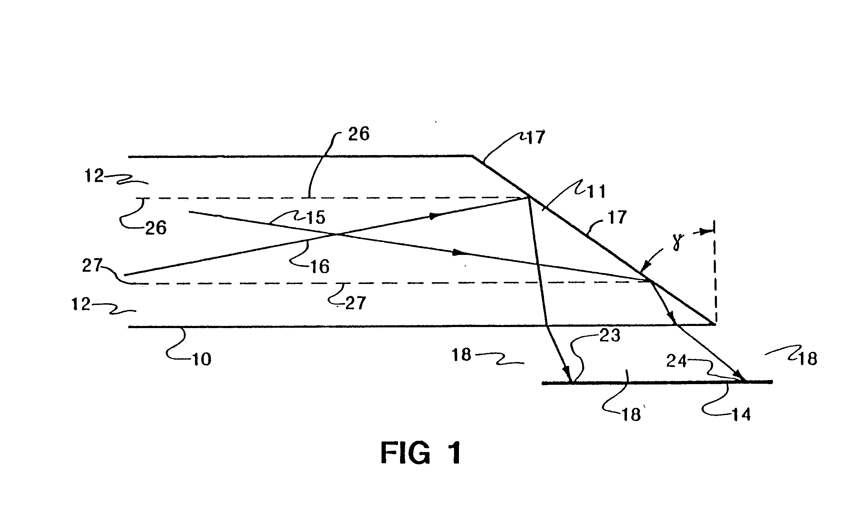

In Figure 1, an optical fiber 10 is shown having a core region 11 and a cladding region 12. An upermost border 26 between cladding region 12 and core region 11, and a lower most border 27 between core region 11 and cladding region 12 are labelled as shown. Optical fiber 10, for example, may be a silica fiber having an index of refraction approximately equal to 1.5 and a numerical aperture equal to 0.2.

An end of optical fiber 10 has an inclined end-face or oblique surface 17, which is measured by a reflection edge angle $\gamma$. Guided light rays 15 and 16 are representative of light rays guided within core region 11. Reflection edge angle $\gamma$ is chosen so that light rays 15 and 16 are totally internally reflected at oblique surface 17, pass through cladding region 12 and encounter a photo diode 14. In the embodiment shown in Figure 1, light rays 15 and 16 also pass through a medium 18 which, for example, may be air.

Reflection edge angle $\gamma$ may be determined from a consideration of the limiting case of guided light ray 15 having the maximum allowable inclination (limit inclination) with respect to lowermost border 27 and guided light ray 16 having the limit inclination with respect to uppermost border 26, respectively, for propagation of guided light rays 15 and 16 to occur with core region 11 by internal reflection at borders 27 and 26. The limit inclination may be determined from the index of refraction of core region 11 and numerical aperture of optical fiber 10, as is known in the art. A lowest allowable value of reflection edge angle $\gamma$ may then be determined from the condition that full internal reflection must take place at the respective intersections of guided light rays 15 and 16 with oblique surface 17 in the case of guided light rays 15 and 16 having limit inclination.

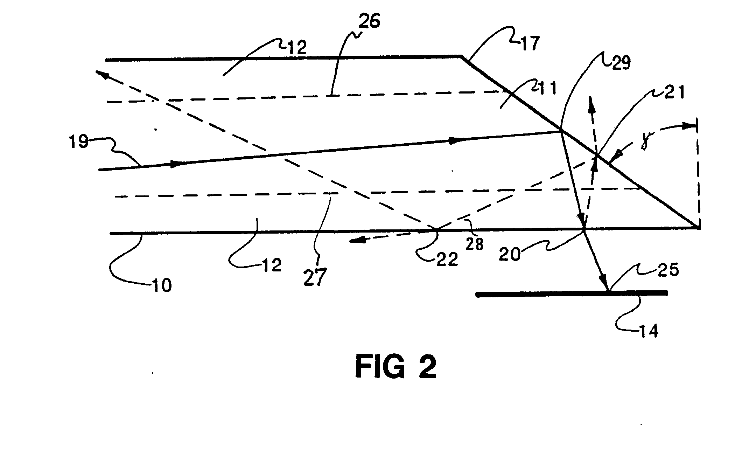

Reflection edge angle $\gamma$ also needs to be chosen so that no reflections from light rays 15 and 16 are launched back down core region 11 becoming guided light rays going in a direction opposite of light rays 15 and 16. This will be explained below with reference to Figure 2.

Figure 2 shows how light from a light ray 19 is reflected so that no portion of light ray 19 is guided back down core region 11. Light ray 19 encounters oblique surface 17 at a location 29 and is completely internally reflected. Light ray 19 exits optical fiber 10 at a location 20 and encounters photo diode 14 at a location 25. If any portion of light ray 19 is reflected at location 20, the portion reflected encounters oblique surface 17 at location 21, and cladding region 12 at location 22 (and possibly at other locations not shown).

The selection of reflection edge angle $\gamma$ to avoid reflected portions of light ray 19 being guided back down core region 11 will now be explained. Consider light ray 28 resulting from a total reflection of light ray 19 at location 29 followed by a double partial reflection at location 20 and location 21. Light ray 28 will be guided back down core region 11 unless its inclination with respect to borders 26 and 27 is greater than the limit inclination. The inclination of light ray 28 is determined by the inclination of light ray 19 and by reflection edge angle γ through a geometric relation as is readily seen from Figure 2. From this geometric relation allowable values of reflection edge angle γ may therefore be found by the condition that by choice of angle γ light ray 28 will have an inclination beyond the limit inclination. A range of allowable values of angle γ results for which no propagation of light ray 28 will occur within core region 11.

Light ray 19 as shown in arbitrarily selected but its inclination is known, from the condition that it be guided by core region 11, to be any value between plus or minus the limit inclination. The relation for selection of reflection edge angle γ, derived as explained above from the geometrical relation between the inclinations of light rays 19 and 28, may then be analytically or numerically evaluated for all values of the inclination of light ray 19 between the limits set forth above, and a range of allowable values of reflection edge angle γ will be found from the evaluation which will provide for freedom from reverse propagating reflections for all light rays 19 which are guidable by core region 11.

It is believed that no further explanation of the relatively simple calculations set forth above is needed for someone skilled in the art to perform the selection of reflection edge angle γ. If core region 11 has an index of refraction equal to 1.5 and a numerical aperture equal to 0.2, then angle γ needs to be greater than 55°.

As can be seen from Figure 1, light ray 16 encounters oblique surface 17 at uppermost border 26 and light ray 15 encounters oblique surface 17 at lowermost border 27. Light ray 15 encounters photo diode 14 at location 24 whilst light ray 16 encounters it at location 23. Location 23 and location 24 define a maximum output fan for light rays in optical fiber 10 which encounter photo diode 14. As angle γ is increased, the maximum output fan becomes larger. In order to minimise the output fan, therefore, it is necessary to keep angle γ as small as possible. Therefore, when core region 11 has an index of refraction equal to 1.5 and a numerical aperture equal to 0.2, it is desirable to keep angle γ as close to 55° as production tolerances will allow.

As shown in Figure 2, part of the initially reflected portion of light ray 19 is refracted out of optical fiber 10 at location 21 and 22, and further locations. Because of this light ray 19 is repeatedly attenuated and after only a very short distance no portion of light ray 19 continues to be reflected back down optical fiber 10. No part of the light ray 28 reflected back into optical fiber at location 21 will be guided in the core region 11 backwards towards the transmitter. Reflections from photo diode 14 are not shown; however, with a selection of reflection edge angle γ as set forth above, no reflections from the photodiode at locations 23 and 24 shown in Figure 1, or at locations inside a fan define by locations 23 and 24, will be guided back down core region 11 because reflections off the photo diode as it is shown are not substantially different in angle from surface reflections, e.g. at location 20, at the surface of fiber 10. (Fig. 2).

## Claims

1. An optical waveguide, particularly an optical fibre (10), having an inclined flat end-face (17) adapted for reflecting the light rays (15, 16, 19) propagating within said waveguide towards an adjacent facing part (20) of the lateral surface of the waveguide, said adjacent facing lateral part thus constituting an exit surface through which at least part of said reflected light rays leave the waveguide, characterized in that the inclination angle (γ) of the reflecting inclined end-face (17) with respect to the normal to the waveguide axis is selected such that, firstly, the light rays propagating within said waveguide are totally internally reflected at said inclined end-face, and that, secondly, the rays (28) which are redirected back into the waveguide after having been reflected, successively, at the inclined end-face (29), at the exit surface (20), and again at the inclined end-face (21), are redirected back into said waveguide so as to have an inclination higher than the limit for total internal reflection, whereby substantially no light will be guided back within the waveguide.

2. A waveguide as in claim 1 having a core region (11) and a cladding region (12) cooperating therewith to propagate light within the core region, characterized in that the inclined end-face (17) reflects into the cladding region light incident thereon from propagation within the core region.

3. A waveguide as in claim 2 wherein the core region is of cylindrical shape with the cladding region surrounding it, characterized in that the exit surface is a part of the outer surface of the cladding region.

4. A waveguide as in claim 2 or 3 wherein the core region has an index of refraction approximately equal to 1.5 and a numerical aperture approximately equal to 0.2, characterized in that the angle (γ) of the inclined end-face (17) is at approximately 55° with respect to the normal to the waveguide axis.

5. An apparatus for detecting light waves comprising a waveguide as in any preceding claim and photo detecting means (14) for detecting light leaving the waveguide through the exit surface.

6. An apparatus as in claim 5, characterized in that the photo detecting means is arranged in front of the exit surface (20) of the waveguide in a manner such that no light incident on the photo detecting means for the waveguide is reflected back by the photo detecting means to be propagated back into the waveguide.

**Patentansprüche**

1. Lichtwellenleiter, insbesondere aus optischen Fasern (10) mit einer geneigten, ebenen Abschlußfläche (17), welche die sich innerhalb des Lichtwellenleiters fortpflanzenden Lichtstrahlen (15, 16, 19) in Richtung auf einen benachbarten Abschnitt (20) der Seitenfläche des Lichtwellenleiters reflektiert, wobei dieser Abschnitt eine Austrittsfläche darstellt, durch welche wenigstens ein Teil der reflektierten Lichtstrahlen den Lichtwellenleiter verläßt, dadurch gekennzeichnet, daß der Neigungswinkel (γ) der reflektierenden geneigten Abschlußfläche (17) bezüglich der Normalen auf die Lichtwellenleiter-Achse so gewählt ist, daß erstens die sich innerhalb des Lichtwellenleiters fortpflanzenden Lichtstrahlen an der geneigten Abschlußfläche nach innen totalreflektiert werden und daß zweitens die Strahlen (28), welche in den Lichtwellenleiter hinein zurückgeworfen werden, nachdem sie nacheinander an der geneigten Abschlußfläche (26), an der Austrittsfläche (20) und wieder an der geneigten Abschlußfläche (21) reflektiert worden sind, so in den Lichtwellenleiter hinein zurückgeworfen werden, daß ihre Neigung über der Grenze für die Totalreflektion nach innen liegt, wodurch im wesentlichen kein Licht in den Lichtwellenleiter zurückgeleitet wird.

2. Lichtwellenleiter nach Anspruch 1, mit einem Kerngebiet (11) und einem damit derart zusammenwirkenden Mantelgegebiet (12), daß sich Licht in dem Kerngebiet fortpflanzt, dadurch gekennzeichnet, daß die geneigte Abschlußfläche (17) dasjenige Licht in das Mantelgebiet hineinreflektiert, das in dem Kerngebiet sich ausbreitend auf die Abschlußfläche auftrifft.

3. Lichtwellenleiter nach Anspruch 2, wobei das Kerngebiet zylindrisch ist und von dem Mantelgebiet umgeben wird, gekennzeichnet, daß die Austrittsfläche ein Teil der Außenfläche des Mantelgebiets ist.

4. Lichtwellenleiter nach Anspruch 2 oder 3, wobei das Kerngebiet einen Brechungsindex von etwa 1,5 und eine numerische Apertur von etwa 0,2 aufweist, dadurch gekennzeichnet, daß der Neigungswinkel (γ) der Abschlußfläche (17) bezüglich der Normalen auf die Lichtwellenleiterachse etwa 55° beträgt.

5. Vorrichtung zum Erfassen von Lichtwellen, mit einem Lichtwellenleiter nach einem der vorangehenden Ansprüche und Photodetektormitteln (14) zum Erfassen von Licht, welches den Lichtwellenleiter durch die Austrittsfläche verläßt.

6. Vorrichtung nach Anspruch 5, dadurch gekennzeichnet, daß die Photodetektormittel vor der Austrittsfläche (20) des Lichtwellenleiters derart angeordnet sind, daß nichts von dem auf die Detektormittel auftreffenden Licht aus dem Lichtwellenleiter von den Photodetektormitteln derart reflektiert wird, daß es in den Lichtwellenleiter zurück gelangt.

**Revendications**

1. Un guide d'ondes optique, notamment une fibre optique (10), avec une face d'extrémité plane inclinée (17) permettant la réflexion des rayons lumineux (15, 16, 19) se propageant à l'intérieure de ce guide d'ondes vers une partie adjacente (20), en vis-à-vis, de la surface latérale du guide d'ondes, cette partie latérale adjacente en vis à vis constituant ainsi une surface de sortie au travers de laquelle au moins une partie desdits rayons lumineux réfléchis quittent le guide d'ondes, caractérisé en ce que l'angle d'inclinaison (γ), par rapport à la direction normale à l'axe du guide d'ondes, de la face d'extrémité réfléchissante inclinée (17) est choisie de sorte que, en premier lieu, les rayons, lumineux se propageant à l'intérieure du guide d'ondes soient totalement réfléchis à l'intérieur sur cette face d'extrémité inclinée et que, en second lieu, les rayons (28) qui sont renvoyés vers le guide d'ondes après avoir été réfléchis successivement sur la face d'extrémité inclinée (29), sur la surface de sortie (20), et à nouveau sur la surface d'extrémité inclinée (21), soit renvoyés dans le guide d'ondes de façon à avoir une inclinaison supérieure à la limite de la réflexion totale interne, afin que pratiquement aucune lumière ne soit renvoyée à l'intérieure du guide d'onde.

2. Le guide d'ondes de la revendication 1, avec une région de coeur (11) et une région de gaine (12) coopérant ensemble pour propager la lumière à l'intérieur de la région de coeur, caractérisé en ce que la face d'extrémité inclinée (17) réfléchit vers la région de gaine la lumière qui la frappe provenant de la propagation à l'intérieure de la région de coeur.

3. Le guide d'ondes de la revendication 2, dans lequel la région de coeur est de forme cylindrique entourée par la région de gaine, caractérisé en ce que la surface de sortie fait partie de la surface extérieure de la région de gaine.

4. Le guide d'ondes de l'une des revendications 2 ou 3, dans lequel la région de coeur a un indice de réfraction approximativement égal à 1,5 et une ouverture numérique approximativement égale à 0,2, caractérisé en ce que l'angle (γ) de la face d'extrémité inclinée (17) est d'environ 55° par rapport à la normale à l'axe du guide d'ondes.

5. Un dispositif de détection d'ondes lumineuses comportant un guide d'ondes selon l'une des revendications précédentes ainsi que des moyens photodétecteurs (14) pour détecter la lumière quittant le guide d'ondes au travers de la surface de sortie.

6. Le dispositif de la revendication 5, caractérisé en ce que les moyens photodétecteurs sont disposés devant la surfaces de sortie (20) du guide d'ondes de telle manière qu'aucune lumière en provenance du guide d'ondes frappant les moyens photodétecteurs ne soit réfléchie par les moyens détecteurs en produisant une rétropropagation dans le guide d'ondes.

**FIG 1**

FIG 2